# EUROPEAN PATENT APPLICATION

(11) **EP 1 535 888 A1**
(43) Date of publication of application: **01.06.2005**
(21) Application number: 03794144.0
(22) Date of filing: 29.08.2003
(51) Int. Cl.: C05F 17/02, C05F 7/00, C02F 11/10, C02F 11/12, F26B 3/20, F26B 17/00, B09B 3/00

(54) **APPARATUS AND METHOD FOR PRODUCING MATURED COMPOST-LIKE SUBSTANCE**

(30) Priority: 02.09.2002 JP 2002256787; 05.09.2002 JP 2002260226; 11.09.2002 JP 2002265705
(71) Applicant: KURITA WATER INDUSTRIES LTD., Shinjuku-ku, Tokyo 160-0023 (JP)
(72) Inventor: MATSUI, Kensuke,c/o KURITA WATER INDUSTRIES LTD., Tokyo 160-0023 (JP)
(74) Representative: Banzer, Hans-Jörg, Dipl.-Ing.
(86) International application number: PCT/JP2003/011069
(87) International publication number: WO 2004/022510

(57) **Abstract**

An apparatus of continuous type for producing matured compost-like material comprises: a vertical vessel 1 which is provided at an upper side thereof with an inlet 2 for organic waste and provided at a lower side thereof with an outlet 3 for the material treated with heat; heating panel(s) 4 for heating the material which is disposed within the vessel 1 in multi-stage form or spiral form; and moving means for moving the material within the vessel 1 from the inlet 2 toward the outlet 3. The material within the vessel 1 is heated and dried and is further treated with heat at temperature of 100-200°C, thereby continuously producing compost-like material.

## Description

### FIELD OF THE INVENTION

The present invention relates to an apparatus and method for producing an odorless product like matured compost in a short period of time from organic waste such as biologically treated sludge and animal droppings.

### BACKGROUND OF THE INVENTION

As the treatment method of recycling organic waste such as biologically treated sludge, garbage, and animal droppings, there are composting method, drying method, and carbonizing method.

The composting method is a method of fermenting organic waste. According to this method, the odor component is degraded, while the organic matter is stabilized to remain in obtained matured compost. This compost has excellent handling property. To obtain such matured compost, however, fermentation over a long term such as several tens of days to one hundred and several tens of days is required.

According to the drying method, organic waste is heated and dried by a dryer such as a hot air dryer to vaporize and remove moisture in the organic waste, thereby obtaining a dried product with moisture content of 30-0%. According to the carbonizing method, organic waste is carbonized by heating and distilling the organic waste to remove moisture in the organic waste and continuously heating them even after completely removing the moisture in the organic waste to keep temperature of 200-900°C by using a carbonizing apparatus. Therefore, the carbonizing method achieves the treatment in a shorter period of time.

The heated and dried product from organic waste is obtained just by evaporating the moisture of the organic waste. Therefore, the heated and dried product has relatively good nature when the raw material is garbage, but easily decomposable organic matter and odor component remain in the product when the raw material is sludge produced by biologically processing drainage or waste. Accordingly, the heated and dried product is inferior to the matured compost in view of odor and handling property and thus still has a problem as unstable for use in agricultural land.

The product obtained by carbonization is odorless. However, since the organic matter is carbonized, the product has no function as organic fertilizer so that it can be used only as a soil conditioner. Since the weight reduction is significant, salt in material is condensed. Therefore, the product has another problem that the salt concentration is so high during the process. Since the organic matter is partially burned, the product still has another problem of dioxin emission similar to an incineration equipment.

Proposed in JP 2001-130990A are a method of and an apparatus for producing matured compost-like material by treating organic waste with heat at temperature of 100-200°C after heating and drying them. According to this method and the apparatus, organic waste is dried with heat and continuously heated at a relatively low temperature of 100-200°C, thereby obtaining a product like matured compost which is odorless, has sufficient organic matter with relatively low salt concentration, and is suitable for organic fertilizer in a short period of time about 10-20 hours.

Since the compost from ordinary garbage is obtained as a result of degrading organic matter with microbes (that is, fermenting the organic matter), the organic matter in the compost is stabilized. Therefore, the degradation speed when entered in soil is slow so that there is no possibility of oxygen deprivation due to rapid degradation. In addition, since odor component is removed, the compost has no or little bad odor. However, according to the composting method, since the odor component is removed by stabilizing the organic matter by the function of microbes (fermentation), a long period of time is required to produce the component.

The matured compost-like material according to JP 2001-130990A is obtained by degrading organic waste with heat after dried and is thus odorless similar to the matured compost obtained by the composting method and has stabilized organic matter. According to the method and apparatus of JP 2001-130990A, organic waste as the raw material is thermally denaturalized by treating the organic waste with heat after heating and drying them. Therefore, the organic fertilizer like matured compost can be obtained by relatively low-temperature process without fermentation process in a short period of time (a day or less).

The apparatus for producing matured compost-like material disclosed in JP 2001-130990A is an apparatus of batch processing type comprising a horizontal type cylindrical heating vessel into which the raw material (organic waste) is fed. Then, the raw material is heated and dried and treated with heat. A product (matured compost-like material) thus obtained is discharged from the heating vessel. In the apparatus for producing matured compost-like material, since heating organic waste by direct heating may cause fire, the indirect heating method is generally employed in which a jacket is provided to surround the heating vessel and heating medium is circulated within the jacket, thereby heating the material.

Proposed in JP 2002-28608A is a method of producing matured compost-like material by treating organic waste with heat after heating and drying them. The temperature of the material during the process is detected and the processing time is set according to the result of detection, thereby stably manufacturing desired high-quality product.

### OBJECT OF THE INVENTION

(1) The conventional apparatus of batch processing type for producing matured compost-like material disclosed in JP 2001-130990A has a problem of losing continuity of process and another problem that a storage hopper for raw material (organic waste) and a storage hopper for product (matured compost-like material) are required to be large. In addition, since the drying process and the heat treatment process after the drying process are completely different in amount and composition of exhaust gas, it is required to have a device for exhaust-gas treatment capable of handling exhaust gases of both processes. In the apparatus of batch processing type, the device for exhaust-gas treatment is also required to be large. Accordingly, because the continuity of process is lost, the processing efficiency is poor, and the large peripheral devices are required, the apparatus of batch processing type is at a disadvantage in both industrial and economical views.

In a conventional apparatus having a horizontal type cylindrical heating vessel and a jacket surrounding the vessel, the capacity of the vessel is increased to increase the amount of raw material to be processed at one cycle. It is impossible to have heat transfer surface corresponding to the increase in the capacity of the vessel. That is, the capacity of the vessel is increased three-dimensionally while the heat transfer surface by the jacket surrounding the vessel must be increased two-dimensionally. Accordingly, the amount of raw material to be treated per a unit area of the heat transfer surface is increased, thus leading to poor heat transfer efficiency. As the amount of material to be treated per the unit area of the heat transfer surface is larger, granulation property of obtained matured compost-like material is poorer. The product may not be granulated and should be powder so that the product has a problem of poor handling property and lower quality.

Because of this situation, conventionally, when the large amount of organic waste must be treated, a plurality of conventional apparatuses are arranged in parallel without excessively increasing the capacity of the heating vessel. Accordingly, the manufacturing cost should be higher and a wide area is required for apparatus installation.

Therefore, the object of the first aspect of the present invention is to provide an apparatus for producing an odorless product like matured compost in a short period of time from organic waste, wherein the apparatus allows the continuous process and can ensure wider heat transfer areas, thereby achieving the size reduction of the apparatus.

(2) the aforementioned problem of the batch processing type apparatus disclosed in JP 2001-130990A can be solved by changing the apparatus to be of a continuous type apparatus capable of continuously supplying raw material and continuously discharging products. However, in case of the continuous type apparatus, it is difficult to sufficiently stabilize organic matter by heating and to obtain high-quality odorless product without fail.

Therefore, the object of the second aspect of the present invention is to provide an apparatus for producing an odorless product like matured compost from organic waste, wherein the apparatus allows the continuous process with ensuring quality of the product.

(3) The matured compost-like material produced by treating organic waste with heat after heating and drying them according to the method described in JP 2001-130990A can be a commercial product as organic fertilizer. In this case, when the product is used as organic fertilizer, the matured compost-like material is preferably composed of grains in a granulated form in view of handling property. However, the matured compost-like material obtained by heating organic waste such as, particularly, animal droppings is generally composed of fine particles of 1 mm or less in diameter so that it has problems of scattering and fling up dust and thus has poor handling property.

Therefore, the object of the third aspect is to provide a method of producing matured compost-like material of high commercial value having excellent handling property as organic fertilizer.

(4) The matured compost-like material produced by treating organic waste with heat after heating and drying them according to the method described in JP 2001-130990A is desired to contain three elements as active substances for vegetation including nitrogen, phosphorous, and potassium in a balanced manner. In the matured compost-like material obtained from organic waste such as animal droppings, the content of each of nitrogen and phosphorous is on the order of 5% (weight ratio when dried) which is sufficient as organic fertilizer, while the content of potassium is, however, less than 0.5% (weight ratio when dried) which is insufficient. Therefore, it is necessary to add another chemical fertilizer containing potassium to compensate for the insufficient potassium.

Therefore, the object of the fourth aspect is to provide a method of producing matured compost-like material of high commercial value having excellent nature as organic fertilizer.

### DISCLOSURE OF THE INVENTION

(1) An apparatus for producing matured compost-like material of the first aspect comprises a vertical vessel which is provided at an upper side thereof with an inlet for organic waste as material to be treated and provided at a lower side thereof with an outlet for the material treated with heat, heating panel(s) for heating the material which is disposed to be in contact with the material within the vessel, and moving means for moving the material within the vessel from the inlet toward the outlet, and is characterized in that the organic waste fed through the inlet is continuously heated and dried and is further treated with heat at temperature of 100-200°C.

In the apparatus for producing matured compost-like material of the first aspect, organic waste continuously fed through the inlet of the vessel is heated and dried by the heating panels so that the moisture thereof is gradually evaporated while it is moved from the inlet to the outlet. After the moisture is completely evaporated, the material is further heated, thereby gradually increasing the temperature of the material within the vessel to 100-200°C. Therefore, the organic matter is altered by heat denaturation, whereby obtained odorless matured compost-like material can be continuously taken out from the outlet.

In the first aspect, since the heating panel(s) for heating the material within the vessel is in multi-stage form or spiral form, wide heat transfer surface is ensured. Therefore, the apparatus has high heat transfer efficiency, high heating efficiency, and excellent granulation. Accordingly, the apparatus of the first aspect allows increase in capacity of the heating vessel. The minimum size of the apparatus and the increase in production amount per installation area for the apparatus are allowed by increasing the capacity of the vertical-type vessel.

In a conventional horizontal-type apparatus having a peripheral jacket, the feeding amount of raw material is generally about 4t/day at the maximum. According to the first aspect, an apparatus having the production amount of 100t/day or more is achieved.

In the apparatus of continuous type in which raw material is continuously fed and product is continuously taken out, it is difficult to securely produce a high quality odorless product by heating organic waste further after drying with heat so that the organic waste is altered by heat denaturation to sufficiently stabilize the organic matters.

In the apparatus of the first aspect, it is preferable that a temperature detector is arranged in the vicinity of the outlet so that the condition of the heat denaturation is determined according to the measured temperature of the temperature detector, and a temperature controlling means controls such that the measured temperature becomes a predetermined value. Therefore, the organic matter in the material is securely altered by heat denaturation, whereby odorless matured compost-like material of stable quality can be continuously taken out from the outlet.

(2) An apparatus for producing matured compost-like material of the second aspect comprises a vessel which is provided with an inlet for organic waste and with an outlet for the material treated with heat, and a heating means for heating and drying the material within the vessel and further treating the material with heat at temperature of 100-200°C, and is characterized in that the organic waste is continuously fed through the inlet and the material treated with heat is continuously discharged through said outlet, and that a temperature detector is arranged in the vicinity of the outlet and a temperature controlling means is provided for controlling such that the temperature measured by the temperature detector becomes a predetermined value.

In the apparatus for producing matured compost-like material according to the second aspect, organic waste is continuously fed through the inlet. The organic waste is heated and dried by a heating means so that the moisture thereof is gradually evaporated while it is conveyed from the inlet to the outlet of the vessel. After the moisture is completely evaporated, the material is further heated, thereby gradually increasing the temperature of the material within the vessel to 100-200°C. Therefore, the organic matter is altered by heat denaturation. According to the second aspect, the condition of the heat denaturation is determined according to the measured temperature of a temperature detector arranged in the vicinity of the outlet, and a temperature controlling means controls such that the measured temperature becomes a predetermined value. Therefore, the organic matter in the material is securely altered by heat denaturation, whereby odorless matured compost-like material of stable quality can be continuously taken out from the outlet.

As the temperature controlling means,
(i) a means for controlling the feeding speed of the organic waste into the vessel,
(ii) a means for controlling the moving speed (residual time) of the material within the vessel, or
(iii) a means for controlling the heating temperature of the heating means may be employed.

(3) A method of producing matured compost-like material of the third aspect is a method of producing matured compost-like material by treating organic waste with heat after heating and drying the organic waste, and is characterized in that the heating and drying process is conducted after polymer is added to and mixed with the organic waste and, then, the heat treatment is conducted.

According to this method, granulation during heat treatment can be improved and matured compost-like material can be produced which is granular and has thus excellent handling property without problems of scattering and fling up dust.

That is, the inventors have studied about the granulation during the heating of organic waste to find the reason why matured compost-like material from organic waste such as animal droppings as raw material can not be granulated while the material from the dehydration sludge cake has relatively well granulation properties. As a result, the inventors found that the factor behind quality of granulation is that no polymer is added to the animal droppings while polymer is normally added to sludge for dehydration treatment and invented a method improving the quality of granulation by adding polymer into organic waste.

Since the matured compost-like material produced according to the method of the third aspect has excellent handling property without problems of deterioration of the working environment due to dust and decrease in yield due to scattering because the matured compost-like material is granular.

(4) A method of producing matured compost-like material of the fourth aspect is a method of producing matured compost-like material by treating organic waste with heat after heating and drying the organic waste, and is characterized in that the heating and drying process is conducted after potassium component is added to and mixed with the organic waste and, then, the heat treatment is conducted.

According to this method, potassium component, which must be insufficient in matured compost-like material is previously added to and mixed with organic waste as the raw material, thereby obtaining matured compost-like material which contains nitrogen, phosphorous, and potassium as fertilizer active elements in a balanced manner. Therefore, it is not required to add another chemical fertilizer containing potassium when the matured compost-like material is used as organic fertilizer, thereby significantly reducing labor hour for manuring.

In the method of the fourth aspect, it is significantly important to add potassium component into organic waste as the raw material before heat treatment. That is, when potassium is added to and mixed with the matured compost-like material obtained by heat treatment, the potassium can be compensated while the potassium is just mixed relative to the matured compost-like material so that the potassium may be transferred immediately by contact with water and the slow acting function as organic fertilizer can not be obtained. On the contrary, according to the forth aspect, potassium component is added to the organic waste as raw material and is treated with heat, whereby the added potassium component is combined with humic component in the organic waste by the heat treatment so that the potassium is fixed together with nitrogen and phosphorous in the obtained matured compost-like material, thereby obtaining slow-acting organic fertilizer.

### BRIEF DESCRIPTION OF THE DRAWINGS

Fig. 1 is a sectional view showing an embodiment of the apparatus for producing matured compost-like material according to the first aspect;
Fig. 2 is a sectional view showing another embodiment of the apparatus for producing matured compost-like material according to the first aspect;
Fig. 3 is a sectional view showing an embodiment of the apparatus for producing matured compost-like material according to the second aspect; and
Fig. 4 is a sectional view showing an embodiment of the apparatus for producing matured compost-like material which is suitable for the third and fourth aspects.

### DETAILED DESCRIPTION

### [I] Description of the first aspect

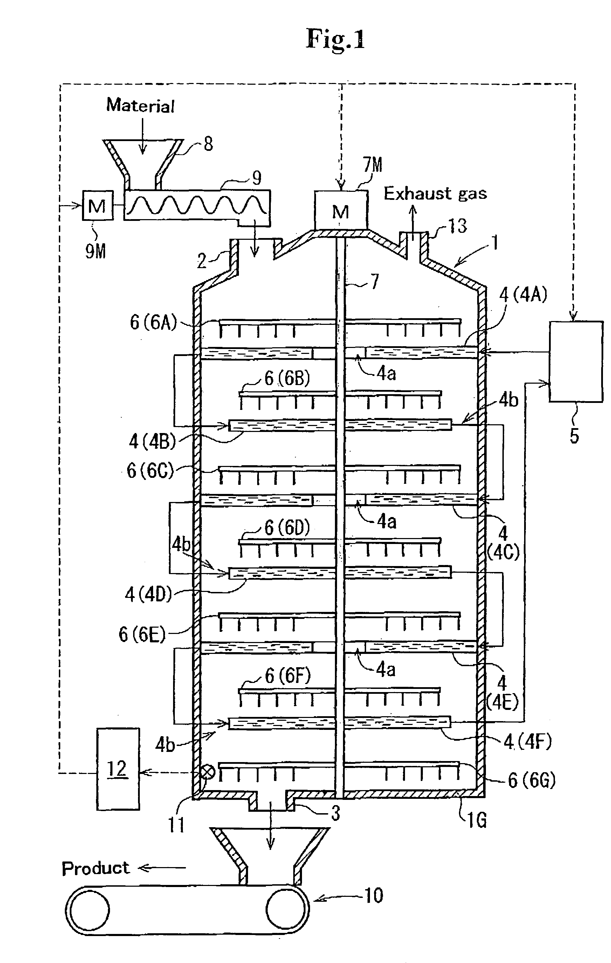

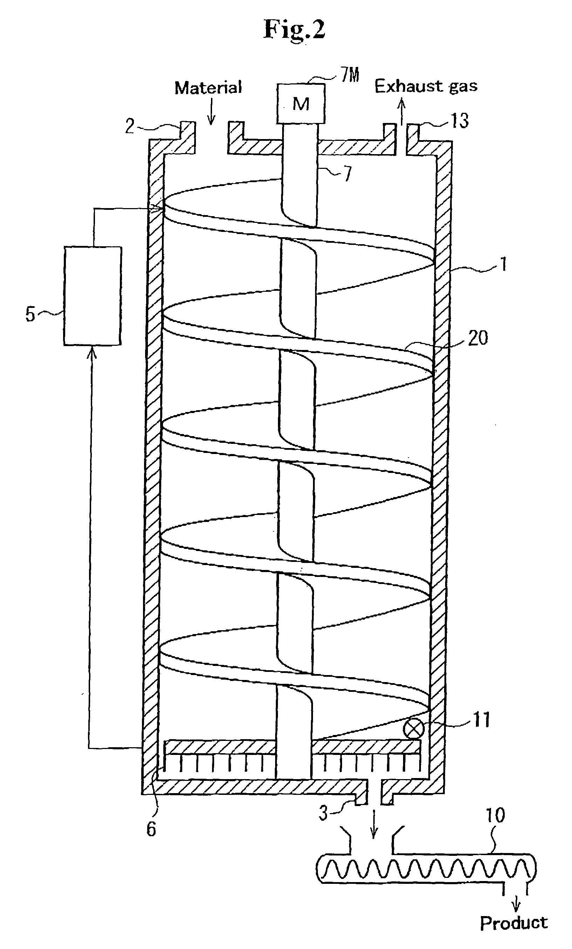

Hereinafter, embodiments of the apparatus for producing matured compost-like material according to the first aspect will be described in detail with reference to Figs. 1 and 2.

Figs. 1 and 2 are sectional views showing embodiments of the apparatus for producing matured compost-like material of the first aspect.

In Fig. 1, numeral 1 designates a vertical type cylindrical heating vessel which is provided at its upper side with an inlet 2 for raw material (organic waste) and provided at its lower side with an outlet 3 for product (matured compost-like material). Inside the vessel 1, heating panels 4 (4A-4F) are arranged in multiple stages (six stages in Fig. 1) . Each of the heating panels 4 (4A-4F) has a hollow structure. Heating oil heated by a heating oil boiler 5 flows from the heating panel 4A to the heating panels 4B, 4C, 4D, 4E, and 4F in this order. After that, the heating oil is returned to the heating oil boiler 5. In the vessel, rakes 6 (6A-6G) are arranged above the heating panels 4A-4F and a bottom 1G of the vessel 1, respectively for moving material. Numeral 7 designates a rotary shaft of the rakes 6 (6A-6G) and is driven by a motor 7M.

Among the hating panels 4A-4F, the heating panels 4A, 4C, 4E are each formed in a ring-like shape having an opening 4a at the center thereof, while heating panels 4B, 4D, 4F are each formed in a disc-like shape having a gap 4b from the inner wall of the vessel 1. The rotary shaft 7 of the rakes 6 (6A-6G) extends through the openings 4a of the heating panels 4A, 4C, 4E and the centers of the heating panels 4B, 4D, 4F to the bottom 1G of the vessel 1. Accordingly, the raw material fed through the inlet 2 is moved by the rakes 6A-6F on the heating panels 4A-4F and the rake 6G on the bottom 1G of the vessel 1 to pass through the opening 4a of the heating panel 4A, the gap 4b between the heating panel 4B and the vessel inner wall, the opening 4a of the heating panel 4C, the gap 4b between the heating panel 4D and the vessel inner wall, and the opening 4a of the heating panel 4E, and the gap between the heating panel 4F and the vessel inner wall in this order and is then discharged through the outlet 3 formed in the bottom 1G of the vessel 1.

The raw material is conveyed from the material hopper 8 by a conveyer 9 such as a screw conveyer, whereby the raw material is fed from the inlet 2 into the vessel 1. The outlet of the conveyer 9 is air-tightly connected to the inlet 2. Numeral 9M designates a motor for driving the conveyer 9. The treated material dried and treated with heat in the vessel 1 and discharged through the outlet 3 (the product, that is, matured compost-like material) is further discharged from a discharge conveyer 10. A part of the treated material may be mixed into the raw material to adjust the moisture level of the raw material.

Inside the vessel 1, a temperature detector 11 is disposed in the vicinity of the outlet 3. The measured value of the temperature detector 11 is inputted into a controller 12. Based on the measurement result, the controller 12 controls the operating condition of the heating oil boiler 5 (the heating temperature of heating oil, that is, the heating temperature of the material within the vessel 1), the speed of the motor 9M for driving the conveyer 9 (the feeding speed of the raw material into the vessel 1), and/or the speed of the motor 7M for rotating the rakes 6 (the moving speed of the material within the vessel 1, that is, the residence time of the material within the vessel 1).

Numeral 13 designates a gas exhaust for exhausting gas from the vessel 1 and having a suction blower. Air is introduced from outside through the outlet 3 at the lower side of the vessel 1 and/or through air inlets not shown and waste gas is exhausted from the gas exhaust 13. The waste gas contains moisture and odor components and is sent to a waste gas treatment device, for example, of wet cleaning, burning deodorization, activated carbon deodorization, chemical deodorization, or biological deodorization.

According to this apparatus, the raw material (organic waste) in the material hopper 8 is conveyed by the conveyer 9 and is thereby continuously fed into the vessel 1 through the inlet 2. The raw material fed into the vessel 1 is first rolled and moved on the first(highest)-stage heating panel 4A by the rake 6A while it is indirectly heated by the heating oil flowing inside the heating panel 4A and is granulated. The material then gradually falls down to the second-stage heating panel 4B through the opening 4a of the heating panel 4A. Similarly, the material reaching the heating panel 4B is rolled and moved by the rake 6B while it is indirectly heated by the heating oil flowing inside the heating panel 4B and is granulated. The material is then gradually falls down onto the third-stage heating panel 4C through the gap 4b between the heating panel 4B and the inner wall of the vessel 1. In this manner, the material within the vessel 1 is indirectly heated on each heating panel and granulated while it is rolled and moved on each heating panel and falls down onto the next lower heating panel. By the heat treatment within the vessel 1, the moisture in the organic waste is evaporated so that the organic waste is dried. The organic waste is heated at a temperature of 100 to 200°C after dried, whereby the odor component in the organic waste is volatilized or degraded. Therefore, the organic matter is altered by heat denaturation, thereby obtaining an odorless matured compost-like material. The obtained matured compost-like material falls down from the heating panel 4F onto the bottom 1G of the vessel 1, is rolled and moved by the rake 6G and is continuously taken out through the outlet 3. Then, the product is discharged by the conveyer 10.

As mentioned above, as organic waste is heated, the moisture in the organic waste is evaporated so that the organic waste is dried. In the process of evaporating the moisture during the drying process, the temperature of the organic waste as the material is less than 100°C when any moisture remains in the organic waste. As the material is heated after the moisture is completely evaporated and removed, the temperature of the material rises to 100°C or more. After that, as the heating is continued, the removal of the odor component and the degradation of the organic matter proceed according to temperature increase, thereby obtaining matured compost-like material having no or little odor.

The temperature of the treated product when the heating treatment is finished depends on the nature of the raw material and the required quality level such as desired concentration of odor component, but the heating treatment is preferably finished when the temperature of the treated material is in a range from 110 to 200°C, particularly from 150 to 200°C. In this temperature range, the moisture is completely evaporated and thus removed and the odor component is volatilized and degraded, thereby obtaining a high quality matured compost-like material.

In the apparatus in Fig. 1, therefore, the temperature detector 11 is arranged in the vicinity of the outlet 3 of the vessel 1 and the control is carried out by the controller 12 such that the measured temperature of the temperature detector 11, i.e. the temperature of the treated material to be discharged, is set to the predetermined temperature for the finish of the heating treatment, preferably from 110 to 200°C, more preferably from 150 to 200°C. The controller 12 conducts any of the following controls (1)-(3):
(1) controlling the feeding speed of the raw material into the vessel 1 by controlling the rotation speed of the motor 9M for driving the conveyer 9 for conveying the raw material;
(2) controlling the moving speed of the material within the vessel 1, i.e. the residence time of the material, by controlling the rotation speed of the motor 7M for driving the rotary shaft of the rakes 6; and
(3) controlling the heating temperature of the material within the vessel 1 by controlling the heating temperature of the heating oil boiler 5.

The controller 12 may conduct any one of the above controls (1)-(3) or may conduct two or more of the above controls (1)-(3) in combination.

As mentioned above, the temperature of the treated material in the vicinity of the outlet 3 of the vessel 1 is detected, and the feeding speed of the raw material, the moving speed of the material within the vessel (the residence time of the material within the vessel), and/or the heating temperature is automatically controlled in such a manner that the temperature of the treated material in the vicinity of the outlet 3 becomes the predetermined temperature for the finish of the heating treatment, thereby preventing excess or insufficient heating treatment, i.e. preventing deterioration in product quality due to the insufficient heat treatment or waste of heating energy due to the excess heat treatment, and therefore stably and securely obtaining a high-quality product.

The temperature detector 11 may be, but not limited to, a means such as a thermocouple of directly measuring the temperature of the material or a means such as an infrared temperature measuring device for indirectly measuring the temperature of the material.

The temperature detector 11 is arranged in the vicinity of the outlet in order to accurately determine the finish of the heat treatment. The location of the temperature detector 11 is not limited inside the vessel 1 as shown in Fig. 1 and may be any place where the temperature of the treated material can be measured such as a place on the outside wall of the vessel 1. The location of the temperature detector 11 is preferably closer to the outlet 3, but may be a place where it is estimated that the heat treatment of the material is substantially finished.

In case of conducting the indirect heating using an oil medium such as the heating oil as shown in Fig. 1, the temperature of the oil medium is kept at temperature from 100 to 300°C, preferably from 150 to 200°C, whereby the material of which temperature was less than 100°C before the finish of drying process is kept at temperature from 100 to 200°C after the finish of the drying process. This means that good heat treatment is done.

According to the apparatus of Fig. 1, raw material can be continuously poured into the vessel 1, heated and dried within the vessel 1, treated with heat at temperature from 100 to 200°C and granulated, and can be continuously taken out as matured compost-like material having stable quality.

In addition, the heat treatment can be conducted in plural stages by the heating panels 4 arranged in multiple stages in the vessel 1. Therefore, sufficient heat transfer area for heating the material can be ensured even when the capacity of the vessel is increased, thereby conducting efficient heating and granulating treatment.

In the apparatus of Fig. 1, there is no particular limitation on the number of stages of the multi-stage heating panels, so the number of stages may be suitably determined according to the capacity of the vessel. Though the heating panels are arranged horizontally and the rakes 6 are used to move the material in the vessel toward the outlet in the embodiment of Fig. 1, the heating panels may be slightly inclined such that the material slides down the inclined surface of the heating panel to sequentially fall down onto the next lower heating panel.

In an apparatus shown in Fig. 2, a spiral-shaped heating panel is employed as the heating panel. In Fig. 2, members exhibiting the same functions as the members shown in Fig. 1 are marked by the same numerals.

In the apparatus of Fig. 2, the spiral-shaped heating panel 20 disposed in a vessel 1 extends from a position near the material inlet of the vertical vessel 1 to a lower position of the vessel 1. The heating panel 20 is driven to rotate by a motor 7M and the rotary shaft 7. The heating panel 20 has a hollow structure in which heating oil heated by a heating oil boiler 5 circulates. The rotary shaft 7 is provided at its upper portion with a hole for supplying the heating oil to the top of the heating panel 20. The rotary shaft 7 is provided at its lower portion with a hole for taking out the heating oil from a lower portion of the heating panel 20.

In this apparatus, raw material (organic waste) fed through an inlet 2 of the vessel 1 is heated by the heating oil flowing within the heating panel 20 and granulated while the raw material rolls and slides the inclined surface of the spiral-shaped heating panel 20 from the beginning of the heating panel 20, and is dried by heat treatment. The material is treated with heat at temperature from 100 to 200°C so as to produce matured compost-like material. The matured compost-like material reaches the bottom 1G of the vessel 1 and is agitated and moved by a rake 6 on the bottom 1G so that the matured compost-like material is discharged as a product through an outlet 3.

Also in this apparatus, a temperature detector 11 is disposed in the vicinity of the outlet 3 of the vessel, and the feeding speed of the raw material, the moving speed of the material within the vessel (the residence time of the material within the vessel), and/or the heating temperature of the heating oil boiler is controlled by a controller (not shown) in such a manner that the measured value of the temperature detector 11 becomes the predetermined temperature, similarly to the apparatus of Fig. 1, thereby obtaining a product with stable quality.

Also in this apparatus, since the spiral-shaped heating panel 20 is arranged vertically in the vertical vessel 1, sufficient heat transfer area for heating the material can be ensured even when the capacity of the vessel 1 is increased, thereby conducting efficient heating and granulating treatment.

In the apparatus of Fig. 2, there is no particular limitation on the inclination angle of the spiral-shaped heating panel so that the inclination angle is suitably determined according to the capacity of the vessel, etc. Also in this apparatus, an agitating means for agitating the material on the spiral-shaped heating panel 20 may be provided.

Organic waste to be treated by the apparatus of the first aspect as mentioned may include biologically treated sludge produced during biological treatment of waste water and waste such as sewage sludge, excess sludge, digested sludge, and sludge of household domestic wastewater treatment tanks, and/or garbage. According to the first aspect, by heat treatment after heating and drying organic waste such as biologically treated sludge, the continuous production of matured compost-like material can be achieved by a large-size vertical apparatus. The obtained matured compost-like material has no or little odor, enough residual organic fertilizer component, and relatively lower salt component so that it can be effectively used as an organic fertilizer and has excellent handling property.

### Example 1-1

Organic waste including organic sludge and garbage, having a moisture content of 85% and an ignition loss of 82% was used as the raw material. The weight of the raw material before heated and dried was about 1 ton per 1 m³.

The apparatus shown in Fig. 1 (but having 11 stages of heating panels) was employed to produce matured compost-like material by continuously treating the raw material with heat.

The inside capacity of the vessel of this apparatus was 28 m³ (8m in height, 2m in diameter). The heating panels were arranged in 11 stages at interval of about 0.5m. Heating oil heated by the heating oil boiler was circulated within the heating panels.

The raw material was continuously fed at 1000 kg/hr and was agitated by rakes on the respective heating panels, whereby a product was taken through the outlet at 160 kg/hr.

During this, the temperature of the heating oil was controlled to be in a range from 200 to 220°C in such a manner that the measured temperature of the temperature detector became in a range from 150 to 160°C.

As a result, matured compost-like material having no or little odor and having a quality equal to that of the matured compost-like material produced by the conventional apparatus of batch processing type having a processing capacity of 4000 kg/day could be produced by the continuous process.

The apparatus for producing matured compost-like material according to the first aspect can effectively produce an odorless product like matured compost by continuously processing organic waste. In addition, since sufficient heat transfer area can be ensured, a vertical heating vessel is easily grown in size, thereby, as a result, achieving the reduction in size of the apparatus and the increase in production amount per area of the apparatus.

### [II] Description of the second aspect

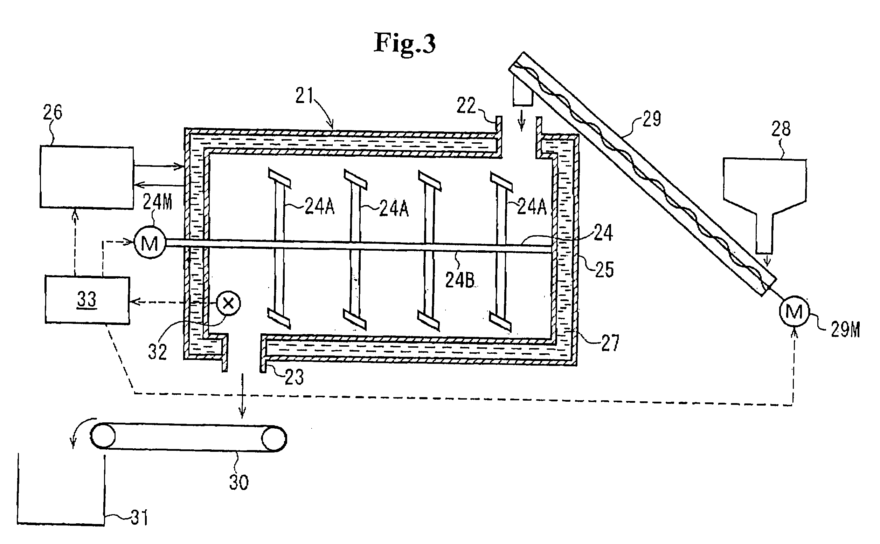

Hereinafter, an embodiment of the apparatus for producing matured compost-like material according to the second aspect will be described in detail with reference to Fig. 3.

Fig. 3 is a sectional view showing an embodiment of the apparatus for producing matured compost-like material of the second aspect.

In Fig. 3, numeral 21 designates a horizontal type cylindrical heating vessel which is provided with an inlet 22 for raw material (organic waste) formed in an upper portion on one end side in the lateral direction and provided with an outlet 23 for product (matured compost-like material) formed in the bottom on the other end side. An agitator 24 for agitating and moving a material (not shown) inside the vessel from the inlet 22 to the outlet 23 and pushing out the material is arranged inside the vessel 21. The agitator 24 comprises a rotary shaft 24B provided with agitating blades 24A, and a motor 24M for rotating the rotary shaft 24B.

Around the vessel 21, a jacket 25 is provided. The jacket 25 is designed such that heating oil heated by a heating oil boiler 26 is circulated within the jacket 25 to heat the material inside the vessel 21.

Raw material is conveyed from the material hopper 28 by a conveyer 29, whereby the raw material is fed through the inlet 22 into the vessel 21. Numeral 29M designates a motor for driving the conveyer 29. The treated material dried and treated with heat in the vessel 21 and discharged from the outlet 23 (the product, that is, matured compost-like material) is conveyed to and stored in a product hopper 31 by a conveyer 30.

Inside the vessel 21, a temperature detector 32 is disposed in the vicinity of the outlet 23. The measured value of the temperature detector 32 is inputted into a controller 33. Based on the measurement result, the controller 33 controls the operating condition of the heating oil boiler 26 (the heating temperature of heating oil, that is, the heating temperature of the material within the vessel 21), the speed of the motor 29M for driving the conveyer 29 (the feeding speed of the raw material into the vessel 21), and/or the speed of the motor 24M for rotating the agitator 24 (the moving speed of the material within the vessel 21).

A blower for discharging gas from the vessel is provided, but not shown. The waste gas is fed into a waste gas treatment device by this blower.

According to this apparatus, the raw material (organic waste) in the material hopper 28 is conveyed by the conveyer 29 and is thereby continuously fed into the vessel 21 through the inlet 22. The raw material fed into the vessel 21 is agitated within the vessel 21 by the agitator 24 and is gradually moved from the inlet 22 side toward the outlet 23 side while it is indirectly heated by the heating oil 27. The obtained matured compost-like material is continuously taken out through the outlet 23. Then, the product is conveyed to and stored in the product hopper 31 by the conveyer 30.

As organic waste is heated, the moisture in the organic waste is first evaporated so that the organic waste is dried. In the process of evaporating the moisture during the drying process, the temperature of the organic waste as the material is less than 100°C when any moisture remains in the organic waste. As the material is continuously heated after the moisture is completely evaporated and removed, the temperature of the material rises to 100°C or more. After that, as the heating is continued, the removal of the odor component and the degradation of the organic matter proceed according to temperature increase, thereby obtaining matured compost-like material having no or little odor.

The temperature of the treated product when the heating treatment is finished depends on the nature of the raw material and the required quality level such as desired concentration of odor component, but the heating treatment is preferably finished when the temperature of the treated material is in a range from 110 to 200°C, particularly from 150 to 200°C. In this temperature range, the moisture is completely evaporated and thus removed and the odor component is volatilized and degraded, thereby obtaining a high quality matured compost-like material.

In the apparatus in Fig. 3, therefore, the temperature detector 32 is arranged in the vicinity of the outlet 23 of the vessel 21 and the control is carried out by the controller 33 such that the measured temperature of the temperature detector 32, i.e. the temperature of the treated material to be discharged, is set to the predetermined temperature for the finish of the heating treatment, preferably from 110 to 200°C, more preferably from 150 to 200°C. The controller 33 conducts any of the following controls (1)-(3):
(1) controlling the feeding speed of the raw material into the vessel 21 by controlling the rotation speed of the motor 29M for driving the conveyer 29 for conveying the raw material;
(2) controlling the moving speed of the material within the vessel 21, i.e. the residence time of the material, by controlling the rotation speed of the motor 24M for driving the agitator 24; and
(3) controlling the heating temperature of the material within the vessel 21 by controlling the heating temperature of the heating oil boiler 26.

The controller 33 may conduct any one of the above controls (1)-(3) or may conduct two or more of the above controls (1)-(3) in combination.

As mentioned above, the temperature of the treated material in the vicinity of the outlet 23 of the vessel 21 is detected, and the feeding speed of the raw material, the moving speed of the material within the vessel, and/or the heating temperature is automatically controlled in such a manner that the temperature of the treated material in the vicinity of the outlet 23 becomes the predetermined temperature for the finish of the heating treatment, thereby preventing excess or insufficient heating treatment, i.e. preventing deterioration in product quality due to the insufficient heat treatment or waste of heating energy due to the excess heat treatment, and therefore stably and securely obtaining a high-quality product.

The temperature detector 32 may be, but not limited to, a means such as a thermocouple of directly measuring the temperature of the material or a means such as an infrared temperature measuring device for indirectly measuring the temperature of the material.

The temperature detector 32 is arranged in the vicinity of the outlet in order to accurately determine the finish of the heat treatment. The location of the temperature detector 32 is not limited inside the vessel 21 as shown in Fig. 3 and may be any place where the temperature of the treated material can be measured such as a place on the outside wall of the vessel 21. The location of the temperature detector 32 is preferably closer to the outlet 23, but may be a place where it is estimated that the heat treatment of the material is substantially finished.

Since heating organic waste by direct heating for producing matured compost-like material may cause fire, it is preferable to heat organic waste by indirect heating using an oil medium such as the heating oil shown in Fig. 3. In case of hating organic waste by the indirect heating, the temperature of the oil medium 17 is kept at temperature from 150 to 200°C, whereby the material of which temperature was less than 100°C before the finish of drying process is kept at temperature from 100 to 200°C after the finish of the drying process. This means that good heat treatment is done.

In the apparatus of Fig. 3, the agitator 24 is preferably an agitator capable of agitating the material within the vessel 21 and capable of moving the material from the inlet 22 side to the outlet 23 side. Besides the agitator having angled agitating blades 24A as shown in Fig. 3, a ribbon-type agitator may be employed. Alternatively, the bottom of the vessel 21 is inclined so that the material is conveyed to the outlet side by agitating operation.

According to the apparatus for producing matured compost-like material of the second aspect, raw material can be continuously poured into the vessel 21, heated and dried within the vessel 21, after that, further treated with heat at temperature from 100 to 200°C, and can be continuously taken out as matured compost-like material having stable quality.

It should be noted that the embodiment of Fig. 3 is just an example of embodiments of the apparatus for producing matured compost-like material according to the second aspect so that the apparatus of the second aspect is not limited to the illustrated example. For example, the apparatus of the present invention is not limited to a type in which the heating and drying process and the heat treatment after that are conducted in the same heating vessel and may be of a type in which the heating and drying process and the heat treatment are conducted in separate vessels, respectively. That is, raw material may be continuously fed into a drying vessel and continuously taken out as dried material. Then, the dried material may be continuously fed into a heat treatment vessel and continuously taken out as a product. In this case, temperature detectors are disposed near the outlet of the drying vessel and the outlet of the heat treatment vessel, respectively, and the feeding speed of the raw material or the dried material, the moving speed of the material within each vessel, and/or the heating temperature of each vessel is controlled in such a manner that the temperature of the dried material near the outlet of the drying vessel is set to the predetermined temperature about 100°C and the temperature of the treated material near the outlet of the heat treatment vessel is set to the predetermined temperature from 110 to 200°C, preferably from 150 to 200°C.

Organic waste to be treated by the apparatus of the second aspect as mentioned may include biologically treated sludge produced during biological treatment of waste water and waste such as sewage sludge, excess sludge, digested sludge, and sludge of household domestic wastewater treatment tanks, and/or garbage. According to the second aspect, by heat treatment after heating and drying organic waste such as biologically treated sludge, the continuous production of matured compost-like material can be achieved. The obtained matured compost-like material has no or little odor, enough residual organic fertilizer component, and relatively lower salt component so that it can be effectively used as an organic fertilizer and has excellent handling property.

### Example 2-1

Organic waste including organic sludge and garbage, having a moisture content of 85% and an ignition loss of 82% was used as the raw material. The weight of the raw material before heated and dried was about 1 ton per 1 m³.

The apparatus shown in Fig. 3 was employed to produce matured compost-like material by continuously treating the raw material with heat.

The inside capacity of the vessel of this apparatus was 10 m³. The jacket was arranged to allow the circulation of heating oil within the jacket. The temperature detector was disposed just before the outlet of the vessel.

The raw material was continuously fed at 250 kg/hr and was agitated, whereby a product was taken through the outlet at 30 kg/hr. The moving speed (residence time) of the material within the vessel was about 20 hours.

During this, the temperature of the heating oil was controlled to be in a range from 200 to 210°C in such a manner that the measured temperature of the temperature detector became in a range from 160 to 170°C.

As a result, matured compost-like material having no or little odor and having a quality equal to that of the matured compost-like material produced by the conventional apparatus of batch processing type could be produced by the continuous process.

### Example 2-2

Matured compost-like material was produced in the same manner as Example 2-1 except that the temperature of the heating oil was set to be constant at 200°C and the feeding speed of the raw material was controlled to be in a range from 200 to 300 kg/hr in such a manner that the measured temperature of the temperature detector became a predetermined temperature. As a result, matured compost-like material having no or little odor and having a quality equal to that of the matured compost-like material produced by the conventional apparatus of batch processing type could be produced by the continuous process.

### Example 2-3

Matured compost-like material was produced in the same manner as Example 2-1 except that the temperature of the heating oil was set to be constant at 200°C and the moving speed (residence time) of the material within the vessel was controlled to be in a range from 15 to 24 hours in such a manner that the measured temperature of the temperature detector became a predetermined temperature. As a result, matured compost-like material having no or little odor and having a quality equal to that of the matured compost-like material produced by the conventional apparatus of batch processing type could be produced by the continuous process.

As for the production of an odorless product like matured compost from organic waste, the apparatus for producing matured compost-like material according to the second aspect can securely produce a high-quality product by continuous process. Therefore, according to the second aspect, reduction in size of peripheral equipments such as the respective storage hoppers for raw material and products and the waste gas treatment device can be achieved, reduction in cost of equipments can be achieved, and matured compost-like material can be effectively produced by the continuous process in a short period of time.

### [III] Description of the third aspect and the fourth aspect

Hereinafter, embodiments of methods for producing matured compost-like material according to the third and fourth aspects will be described in detail.

In the production of matured compost-like material from organic waste according to the third and fourth aspect, the organic waste is heated and dried so that the moisture in the organic waste is gradually evaporated. Also after the moisture content becomes less than 1%, i.e. the drying process is finished, the organic waste is further continuously heated at temperature preferably from 100 to 200°C.

During the moisture is evaporated by heating and drying the organic waste, the temperature of the organic waste as the material is less than 100°C when any moisture remains in the organic waste. As the material is continuously heated after the moisture is completely evaporated and removed, the temperature of the material rises to 100°C or more. As the material is kept in this state for 3-6 hours, organic matter in the material begins to be reduced. As the heating is continued until the organic matter is reduced about 3-20%, matured compost-like material having no or little odor can be obtained.

The suitable reduction of organic matter for producing a product after this heating depends on the kind of organic waste to be treated. For example, in case of excess sludge of activated sludge, the suitable reduction is relatively large, i.e. 5-20%. In case of digested sludge, the suitable reduction is relatively small, i.e. 3-10%.

The heating temperature for the heating treatment after the heating and drying process is preferably in a range from 100 to 200°C, more preferably from 150 to 200°C. In this temperature range, the moisture is completely evaporated and thus removed, the odor component is volatilized and degraded, and organic matter is not carbonized, thereby obtaining a high quality matured compost-like material.

According to the third and fourth aspects, the time periods required for the heating and drying process and for the heat treatment process vary according to the nature of raw material to be treated, the pouring method of raw material into a drying vessel, the specification of a heating device, and the operating condition. Normally, the time period for the heating and drying process is 10-15 hours and the time period for the heat treatment after that is 3-6 hours.

The obtained product must be a high-quality product like matured compost having no or little odor, enough residual organic fertilizer component, and relatively lower salt component.

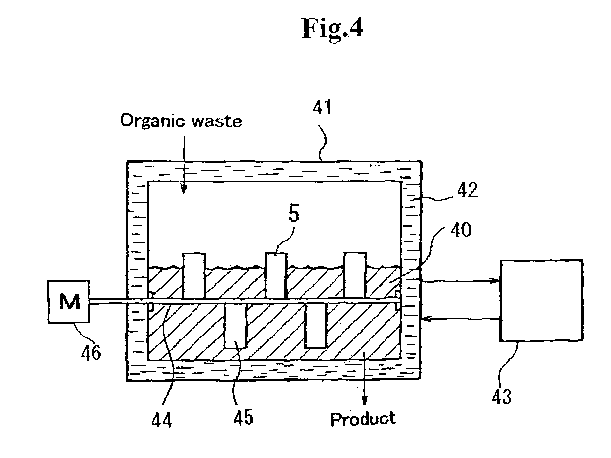

Fig. 4 is a system diagram showing an embodiment of the apparatus for producing matured compost-like material which is suitable for the embodiments of the methods according to the third and fourth aspects.

Since heating organic waste by direct heating may cause fire, indirect heating is employed to conduct the heating and drying and the heat treatment in the apparatus shown in Fig. 4.

The indirect heating apparatus of Fig. 4 comprises a heating vessel 41 having a double wall structure forming a circulation passage in which oil medium 42 is circulated, thereby indirectly heating raw material 40 within the heating vessel 41. The oil medium 42 is heated by a heat exchanger 43 and is circulated in the circulation passage of the heating vessel 41. Organic waste is poured into the heating vessel 41 through an upper inlet (not shown), is agitated by agitating blades 45 driven by the rotation of a rotary shaft 44, and is heated with the oil medium 42, so that matured compost-like material is taken out as a product from the heating vessel 41 through a bottom outlet (not shown). Numeral 46 designates a motor for driving the rotary shaft 44.

For heating organic waste by the indirect heating apparatus, the temperature of the oil medium 42 is kept at temperature from 150 to 200°C, whereby the material 40 of which temperature was less than 100°C before the finish of drying process is kept at temperature from 100 to 200°C after the finish of the drying process. This means that good heat treatment is done.

Waste gas containing volatile organic matter is generated during the aforementioned treatment. The waste gas is discharged through a gas exhaust (not shown) and is treated separately.

According to the method of the third aspect, for producing such matured compost-like material, polymer is added to and mixed with organic waste as raw material and, after that, the heating treatment is conducted without dehydration or after dehydration.

The polymer may be natural polymer, synthetic polymer, or a combination thereof. Examples of natural polymer include starch, chitosan, and the like. Example to be employed as synthetic polymer include nonionic polymers such as polyacrylamide and polymethacrylamide, anionic polymers such as polyacrylic acid and copolymer of acrylamide and acrylic acid, cationic polymers such as copolymer of (meth)acryloyl oxyethyl trimethyl ammonium chloride and acrylamide, and amphoteric polymer such as copolymer of (meth)acryloyl oxyethyl trimethyl ammonium chloride and acrylic acid and acrylamide. These may be used alone or in combination.

The polymer is preferably liquid phase such as aqueous solution, dispersion liquid, and emulsion in view of kneading property when added into organic waste. The polymer concentration of the aqueous solution is preferably in a range from 0.1 weight % to 1.0 weight %. In case of dispersion liquid or emulsion, it can be used directly or as aqueous solution.

The amount of polymer to be added into the organic waste is suitably determined according to the solid matter concentration of the organic waste. For example, when the organic waste has a solid matter concentration about 2%, it is required to conduct dehydration by adding polymer of 0.6-1.5% in dry weight ratio to increase the solid matter concentration. After the dehydration, the polymer gathered in the dehydration sludge has granulating effect.

On the other hand, since poultry dropping has relatively high solid matter concentration about 30%, the dehydration is not required. In this case, the addition amount of polymer just for the granulation is enough i.e. about 0.1-0.5% in dry weight ratio. In addition, since the polymer is not required to have dehydration function, natural polymer such as starch is enough for sufficiently exhibiting the effect.

It is preferable that the polymer is sufficiently evenly mixed relative to the organic waste. Accordingly, it is preferable that a mixing bath is provided separately from the heat treatment apparatus for organic waste and that after adding and mixing the polymer into the organic waste, the organic waste including the polymer is fed into the heat treatment apparatus without the dehydration or after the dehydration. When the heat treatment apparatus is provided with an agitating means enough for achieving uniform mixing, organic waste and polymer may be fed into the heat treatment apparatus. In this case, the organic waste and the polymer may be sufficiently mixed prior to the heating in the heat treatment apparatus and, after that, heated.

The mixture obtained by adding and mixing the polymer into the organic waste is heated with being agitated as mentioned above. The mixture is treated with heat after subjected to the drying process, thereby obtaining matured compost-like material. According to the method of the third and fourth aspects, advantageous granulation is conducted during the agitation with heat, so a method of producing matured compost-like material which is granular and has excellent handling property.

There is no particular limitation on grain size of the matured compost-like material. It is preferable that the matured compost-like material has an mean grain size between 2 mm and 5 mm in view of handling property as organic fertilizer.

According to the method of the fourth aspect, potassium component is added to and mixed with organic waste as raw material and, after that, the heating treatment is conducted so as to produce matured compost-like material.

The potassium component may be a potassium compound or a substance containing potassium in concentrated amount. As the potassium compound, powder of potassium sulfate or powder of potassium chloride which is widely used as chemical fertilizer can be suitably employed. As the substance containing potassium in concentrated amount, substance without component harmful to vegetation is preferable, for example, food waste such as potato chaffs may be employed.

There is no particular limitation on adding amount of the potassium component in the organic waste. It is preferable that potassium component is added such that the content of potassium in the matured compost-like material becomes 2-5 weight % (dry weight ratio), thereby obtaining organic fertilizer containing three elements of nitrogen, phosphorous, and potassium in a balanced manner.

Organic waste having relatively high moisture content such as containing moisture about 50-85 % is better than organic waste having low moisture content in view of mixing uniformity of potassium component. However, there is no limitation on the moisture content of organic waste. In view of kneading property when added into organic waste, the potassium component may be added in liquid phase such as aqueous solution.

Similarly to the polymer, it is preferable that the potassium component is sufficiently evenly mixed relative to the organic waste. Accordingly, it is preferable that a mixing bath is provided separately from the heat treatment apparatus for organic waste and that after adding and mixing the potassium component into the organic waste, the organic waste including the potassium component is fed into the heat treatment apparatus. When the heat treatment apparatus is provided with an agitating means enough for achieving even mixing, organic waste and polymer may be fed into the heat treatment apparatus. In this case, the organic waste and the polymer may be sufficiently mixed prior to the heating in the heat treatment apparatus and, after that, heated.

The mixture obtained by adding and mixing the potassium component into the organic waste is heated with being agitated as mentioned above. The mixture is treated with heat after subjected to the drying process, thereby obtaining matured compost-like material. According to the method of the fourth aspect, potassium component which must be insufficient in matured compost-like material made of ordinary organic waste is compensated, thereby obtaining matured compost-like material which contains nitrogen, phosphorous, and potassium in a balanced manner and thus can be used as organic fertilizer which can provide excellent balance of three fertilizer elements by itself.

In the present invention, by adding both polymer and potassium component into the organic waste during the production of matured compost-like material by treating organic waste with heat after heated and dried, matured compost-like material of high commercial value which is granular and thus has excellent handling property and, in addition, excellent balance of fertilizer elements.

Fig. 4 shows an example of the apparatus for producing matured compost-like material suitable for the embodiments of the third and fourth aspects. The method of the present invention is not limited to a type in which the heating and drying process and the heat treatment after that are conducted in the same heating vessel as shown in Fig. 4 and may be of a type in which the heating and drying process and the heat treatment are conducted in separate vessels, respectively. The methods of the third and fourth aspects can be carried out by any of the apparatus for producing matured compost-like material as shown in Figs. 1 through 3.

Organic waste to be treated by the method of the third or fourth aspect as mentioned may include sludge obtained by dehydrating biologically treated sludge produced during biological treatment of waste water and waste such as sewage sludge, excess sludge, digested sludge, and sludge of household domestic wastewater treatment tanks, garbage, and/or animal droppings. According to the third and fourth aspects, by heat treatment after heating and drying organic waste, matured compost-like material of high commercial value can be obtained which has no or little odor, enough residual organic fertilizer component, and relatively lower salt component so that it can be effectively used as an organic fertilizer.

### Example 3-1

The apparatus shown in Fig. 4 was employed to produce matured compost-like material by treating poultry dropping as raw material with heat.

Aqueous solution containing 0.2 weight % of polyacrylamide as synthetic polymer was added in an amount of 0.5 weight % to the poultry dropping in dray weight ratio and evenly mixed. The mixture was fed into the heating vessel and was treated with heat with being agitated. Oil medium which was heated to 200°C was circulated. As a result, the material within the vessel was completely dried and the temperature rose to 100°C by 8-hour heat treatment. After that, the material was further treated with heat at temperature from 100 to 200°C for three hours, thereby obtaining granular matured compost-like material.

The mean grain size of the obtained matured compost-like material and the ratio of fine particles having grain size of less than 1 mm relative to the matured compost-like material were measured and the results are shown in Table 1.

### Comparative Example 3-1

Matured compost-like material was produced in the same manner as Example 3-1 except that the polymer was not added. The mean grain size of the obtained matured compost-like material and the ratio of fine particles having grain size of less than 1 mm relative to the matured compost-like material were measured and the results are shown in Table 1.

**Table 1**

| Examples | Polymer | Matured compost-like material | |
|---|---|---|---|
| | | Mean grain size (mm) | Ratio of fine particles less than 1 mm in grain size (%) |
| Example 3-1 | Added | 3.2 | 22 |
| Comparative Example 3-1 | Not added | 0.8 | 80 |

It is found from Table 1 that adding polymer enables production of matured compost-like material which is granular and thus has excellent handling property.

According to the method of producing matured compost-like material of the third aspect, as the method of producing matured compost-like material by treating organic waste with heat after heated and dried, improved granulation can be obtained and matured compost-like material can be produced which is granular and has thus excellent handling property without problems of scattering and fling up dust.

### Example 4-1

The apparatus shown in Fig. 4 was employed to produce matured compost-like material by treating organic sludge having a moisture content of 82% (excess sludge discharged during the treatment of activated sludge) as raw material.

A mixture was prepared by adding 4 kg of potassium sulfate powder in 160 kg of organic sludge and mixing them. The mixture was fed into the heating vessel and was treated with heat with being agitated. Oil medium which was heated to 200°C was circulated. As a result, the material within the vessel was completely dried and the temperature rose to 100°C by 13-hour heat treatment. After that, the material was further treated with heat at temperature from 100 to 200°C for four hours, thereby obtaining granular matured compost-like material having grain size about 1-5 mm.

The contents of nitrogen, phosphorous, and potassium in the obtained matured compost-like material were measured and the results are shown in Table 2.

### Comparative Example 4-1

Matured compost-like material was produced in the same manner as Example 4-1 except that the potassium sulfate powder was not added. The contents of nitrogen, phosphorous, and potassium in the obtained matured compost-like material were measured and the results are shown in Table 2.

**Table 2**

| Examples | Potassium sulfate powder | Contents in Matured compost-like material (weight %) | | |
|---|---|---|---|---|
| | | Nitrogen | Phosphorous | Potassium |
| Example 4-1 | Added | 5.6 | 3.8 | 3.2 |
| Comparative Example 4-1 | Not added | 5.6 | 3.8 | 0.4 |

It is found from Table 2 that adding potassium component enables production of matured compost-like material which has excellent balance of fertilizer elements.

Test of pot caltivation of Chinese cabbage was conducted by adding the matured compost-like material obtained in Example 4-1 in an amount of 5 kg per 1 m³ of soil for soil treatment. As a result, growth and development was obtained which was significantly better than a case of treatment with commercial available chemical fertilizer (nitrogen, phosphorous and potassium each contained by 10 weight %) in an amount of 2.5 kg/m³.

According to the method of producing matured compost-like material of the fourth aspect, as the method of producing matured compost-like material by treating organic waste with heat after heated and dried, matured compost-like material can be produced which has excellent balance of nitrogen, phosphorous and potassium as organic fertilizer and thus can provide well manuring effect when added only by itself.

## Claims

1. An apparatus for producing matured compost-like material comprising:
a vertical vessel which is provided at an upper side thereof with an inlet for organic waste as material to be treated and provided at a lower side thereof with an outlet for the material treated with heat;
heating panel(s) for heating the material which is disposed to be in contact with the material within the vessel; and
moving means for moving the material within the vessel from the inlet toward the outlet, wherein
the organic waste fed through the inlet is continuously heated and dried and is further treated with heat at temperature of 100-200°C.

2. An apparatus for producing matured compost-like material as claimed in claim 1, wherein a temperature detector is arranged in the vicinity of the outlet and a temperature controlling means is provided for controlling such that the temperature measured by the temperature detector becomes a predetermined value.

3. An apparatus for producing matured compost-like material as claimed in claim 2, wherein said temperature controlling means is a means for controlling the feeding speed of said organic waste into said vessel.

4. An apparatus for producing matured compost-like material as claimed in claim 2, wherein said temperature controlling means is a means for controlling the moving speed of the material within said vessel.

5. An apparatus for producing matured compost-like material as claimed in claim 2, wherein said temperature controlling means is a means for controlling the heating temperature of said heating panel.

6. An apparatus for producing matured compost-like material as claimed in claim 2, wherein said temperature controlling means controls such that said temperature measured by said temperature detector becomes 110-200°C.

7. An apparatus for producing matured compost-like material as claimed in claim 1, wherein an agitator is provided for agitating the material on the heating panel.

8. An apparatus for producing matured compost-like material as claimed in claim 1, wherein the heating panels are arranged in multiple stages.

9. An apparatus for producing matured compost-like material as claimed in claim 8, wherein first heating panels each having an opening at the center thereof and second heating panels each having a gap between the outer periphery thereof and the inner surface of the vessel are arranged alternatively, and
the material falls down from the first heating panel through the opening and falls down from the second heating panel through the gap.

10. An apparatus for producing matured compost-like material as claimed in claim 9, wherein rakes are provided for agitating the material on the respective heating panels.

11. An apparatus for producing matured compost-like material comprising:
a vessel which is provided with an inlet for organic waste and with an outlet for the material treated with heat; and
a heating means for heating and drying the material within the vessel and further treating the material with heat at temperature of 100-200°C; wherein
the organic waste is continuously fed through the inlet and the material treated with heat is continuously discharged through said outlet, and
a temperature detector is arranged in the vicinity of the outlet and a temperature controlling means is provided for controlling such that the temperature measured by the temperature detector becomes a predetermined value.

12. An apparatus for producing matured compost-like material as claimed in claim 11, wherein said temperature controlling means is a means for controlling the feeding speed of said organic waste.

13. An apparatus for producing matured compost-like material as claimed in claim 11, wherein said temperature controlling means is a means for controlling the moving speed of the material within said vessel.

14. An apparatus for producing matured compost-like material as claimed in claim 11, wherein said temperature controlling means is a means for controlling the heating temperature of said heating means.

15. An apparatus for producing matured compost-like material as claimed in claim 11, wherein said temperature controlling means controls such that said temperature measured by said temperature detector becomes 110-200°C.

16. A method of producing matured compost-like material by treating organic waste with heat after heating and drying the organic waste, wherein
the heating and drying process is conducted after polymer is added to and mixed with the organic waste and, then, the heat treatment is conducted.

17. A method of producing matured compost-like material as claimed in claim 16, wherein said polymer is one or more selected from a group consisting of starch, chitosan, polyacrylamide, polymethacrylamide, polyacrylic acid, copolymer of acrylamide and acrylic acid, copolymer of (meth)acryloyl oxyethyl trimethyl ammonium chloride and acrylamide, and copolymer of (meth)acryloyl oxyethyl trimethyl ammonium chloride and acrylic acid and acrylamide.

18. A method of producing matured compost-like material as claimed in claim 16, wherein said polymer is added in the form of aqueous solution, dispersion liquid, and emulsion.

19. A method of producing matured compost-like material as claimed in claim 18, wherein the polymer concentration in the aqueous solution of polymer is 0.1-1.0 weight %.

20. A method of producing matured compost-like material as claimed in claim 16, wherein said organic waste is organic sludge having solid matter concentration about 2% and the adding amount of polymer relative to the organic waste is 0.6-1.5% in dry weight ratio.

21. A method of producing matured compost-like material as claimed in claim 16, wherein said organic waste is poultry dropping having solid matter concentration about 30% and the adding amount of polymer relative to the organic waste is 0.1-0.5% in dry weight ratio.

22. A method of producing matured compost-like material as claimed in claim 16, wherein a mixture obtained by adding and mixing polymer into the organic waste is granulated by heating the mixture with agitating so as to obtain granular matured compost-like material.

23. A method of producing matured compost-like material as claimed in claim 22, wherein the mean grain size of the matured compost-like material is 2-5 mm.

24. A method of producing matured compost-like material as claimed in claim 16, wherein, after polymer and potassium component are added to and mixed with the organic waste, the mixture is heated and dried and is then treated with heat.

25. A method of producing matured compost-like material as claimed in claim 16, wherein the material is treated with heat at temperature of 100-200°C after heated and dried.

26. A method of producing matured compost-like material as claimed in claim 16, wherein the time of the heating and drying process is 10-15 hours and the time for the heat treatment after that is 3-6 hours.

27. A method of producing matured compost-like material by treating organic waste with heat after heating and drying the organic waste, wherein
the heating and drying process is conducted after potassium component is added to and mixed with the organic waste and, then, the heat treatment is conducted.

28. A method of producing matured compost-like material as claimed in claim 27, wherein said potassium component is one or more selected from a group consisting of powder of potassium sulfate, powder of potassium chloride, and food waste containing potassium.

29. A method of producing matured compost-like material as claimed in claim 27, wherein the potassium component is added such that the content of potassium in the matured compost-like material becomes 2-5 weight % (dry weight ratio).

30. A method of producing matured compost-like material as claimed in claim 27, wherein the moisture content of the organic waste is 50-85%.

31. A method of producing matured compost-like material as claimed in claim 27, wherein the material is treated with heat at temperature of 100-200°C after heated and dried.

32. A method of producing matured compost-like material as claimed in claim 27, wherein the time of the heating and drying process is 10-15 hours and the time for the heat treatment after that is 3-6 hours.
